# EUROPEAN PATENT SPECIFICATION

(11) **EP 2 120 586 B1**
(45) Date of publication and mention of the grant of the patent: **04.07.2018**
(21) Application number: 08729603.4
(22) Date of filing: 12.02.2008
(51) Int. Cl.: A01N 57/20, A01N 25/30, A01N 25/04, A01N 25/06, A01P 13/00, C05G 3/06

(54) **ADJUVANTS AND METHODS OF USING THEM**
ADJUVANTIEN UND VERFAHREN ZUR DEREN VERWENDUNG
ADJUVANTS, ET LEURS PROCEDES D'UTILISATION

(30) Priority: 12.02.2007 US 889422 P; 05.02.2008 US 25833
(43) Date of publication of application: 25.11.2009
(73) Proprietor: Archer-Daniels-Midland Company, Decatur, IL 62526 (US)
(72) Inventor: BASEETH, Shireen, S., Decatur, IL 62526 (US); SEBREE, Bruce, R., Newton, KS 67114 (US)
(74) Representative: dompatent von Kreisler Selting Werner - Partnerschaft von Patent- und Rechtsanwälten mbB
(86) International application number: PCT/US2008/053667
(87) International publication number: WO 2008/100896

(56) References cited:
- EP-A- 0 099 039
- EP-A- 0 577 914
- WO-A-01/26463
- WO-A-89/08628
- WO-A-2007/008557
- WO-A-2007/030649
- WO-A-2008/085232
- US-A- 5 260 260
- US-A1- 2002 160 916
- US-A1- 2006 180 677
- US-B1- 6 797 673
- P. J. HOLLOWAY ET AL.: "Effects of some agricultural tank-mix adjuvants on the deposition effeiciency of aquoeus sprays on foliage" CROP PROTECTION, vol. 19, no. 1, 2000, pages 27-37, XP002513889
- "LI 700 surfactant", , 1 January 2006 (2006-01-01), pages 1-2, XP055269062, Retrieved from the Internet: URL:http://amgrowcorporate.net.au/nuturf/w p-content/uploads/sites/2/2015/09/LI-700-i nfo.pdf [retrieved on 2016-04-27]

## Description

### TECHNICAL FIELD

This invention is directed towards a process for producing bio-based and bio-degradable microemulsions comprising agricultural adjuvants, compositions and uses thereof. The invention also relates to methods of using such microemulsions to disperse a compound in water.

### BACKGROUND

US Patent 6,348,434 describes non-aqueous emulsifiable concentrates for herbicidally active compounds which contain alkyl pheonxyalkanoates and benzene sulfonate. However, these compounds have environmental implications and use aromatic compounds such as benzene sulfonate. Similarly, patent application WO 98/48624 describes an ethoxylated nonyl phenol phosphate ester as an anionic surfactant. However, nonyl phenol is classified by the U.S. Environmental Protection Agency as an "inert of toxicological concern" that must be identified on pesticide labels. Nonyl phenol esters may damage the environment due to their capability to form toxic metabolites and their use is not favored due to their suspected estrogenic activity. As further art the following can be mentioned: WO 2007/008557; US 6,797,673; WO 01/26463; WO 89/08628; P. J. Holloway et al., Crop Protection, vol. 19, no. 1, 2000, p. 27-37; US 2006/180677; US 2002/160916; US 5,260,260; EP 0 577 914; EP 0 099 039. Further not pre-published WO 2008/085232 and WO 2007/030649 can be named.

Thus, a need exists for a bio-based adjuvant system that does not contain nonyl phenol ethoxylates or other aromatic compounds that have environmental implications, yet provides the desired dispersability characteristics.

### SUMMARY

The present invention fulfills this need and discloses environmentally friendly adjuvants and/or surfactants.
In one embodiment, a composition comprises an acidifier, an emulsifier, a co-surfactant and water.

In another embodiment, a process comprises mixing an emulsifier with a co-surfactant, thus forming a blend, and mixing an acidifier and water with the blend, thus forming an adjuvant composition.

In an additional embodiment, a composition comprises propionic acid, an emulsifier, vegetable fatty acids, water and a compound selected from the group consisting of sorbitan monostearate, polyoxyethylene ester of rosin, polyoxyethylene dodecyl mono ether, polyoxyethylene-polyoxypropylene block copolymer, polyoxyethylene monolaurate, polyoxyethylene monohexadecyl ether, polyoxyethylene monooleate, polyoxyethylene mono(cis-9-octadecenyl)ether, polyoxyethylene monostearate, polyoxyethylene monooctadecyl ether, polyoxyethylene dioleate, polyoxyethylene distearate, polyoxyethylene sorbitan monolaurate, polyoxyethylene sorbitan monooleate, polyoxyethylene sorbitan monopalmitate, polyoxyethylene sorbitan monostearate, polyoxyethylene sorbitan trioleate, polyoxyethylene sorbitan tristearate, polyglycerol ester of oleic acid, polyoxyethylene sorbitol hexastearate, polyoxyethylene monotetradecyl ether, polyoxyethylene sorbitol hexaoleate, fatty acids, tall-oil, hexaester with sorbitol, ethoxylated castor oil, ethoxylated soybean oil, ethoxylated polyoxyethylene sorbitol tetraoleate, fatty acids, mixed esters with glycerol and polyethylene glycol, alcohols, C9-C16 ethoxylated derivatives of any thereof, and combinations of any thereof.

In yet a further embodiment, a composition consists essentially of an acidifier, an emulsifier, a co-surfactant and water.

Other embodiments of the present invention will be apparent to those skilled in the art form and from the descriptions, which follow herein.

Specifically, the present invention is directed to the embodiments outlined in the claims.

The present disclosure provides in embodiments.
1. A composition comprising: an acidifier; an emulsifier; a co-surfactant; and water.
2. The composition of embodiment 1 , further comprising a compound, wherein upon contact of the composition and the compound in water, the compound is dispersed in the water.
3. The composition of embodiment 1 or embodiment 2, wherein the acidifier is selected from the group consisting propionic acid, methyl acetic acid, acetic acid, lactic acid, fumaric acid, citric acid, phosphoric acid and combinations of any thereof.
4. The composition of any one of embodiments 1-3, further comprising a compound selected from the group consisting of vegetable fatty acids, soy fatty acids, derivatives of any thereof, and combinations of any thereof.
5. The composition of any one of embodiments 1-4, wherein the water is hard water.
6. The composition of embodiment 4, wherein the vegetable fatty acids are selected from the group consisting of butyric acid, caproic acid, caprylic acid, capric acid, lauric acid, myristic acid, palmitic acid, stearic acid, arachic acid, behenic acid, lignoceric acid, hexacosanoic acid, octacosanoic acid, triacontanoic acid and n-dotriacontanoic acid, and those having an odd number of carbon atoms, such as propionic acid, n-valeric acid, enanthic acid, pelargonic acid, hendecanoic acid, tridecanoic acid, pentadecanoic acid, heptadecanoic acid, nonadecanoic acid, heneicosanoic acid, tricosanoic acid, pentacosanoic acid, heptacosanoic acid, isobutyric acid, isocaproic acid, isocaprylic acid, isocapric acid, isolauric acid, 11-methyldodecanoic acid, isomyristic acid, 13-methyl-tetradecanoic acid, isopalmitic acid, 15-methyl-hexadecanoic acid, isostearic acid, 17-methyloctadecanoic acid, isoarachic acid, 19-methyl-eicosanoic acid, a-ethyl-hexanoic acid, a-hexyldecanoic acid, a-heptylundecanoic acid, 2-decyltetradecanoic acid, 2-undecyltetradecanoic acid, 2-decylpentadecanoic acid, 2-undecylpentadecanoic acid, Fine oxocol 1800 acid (product of Nissan Chemical Industries, Ltd.), 6-methyl-octanoic acid, 8-methyl-decanoic acid, 10-methyl-dodecanoic acid, 12-methyl-tetradecanoic acid, 14-methyl-hexadecanoic acid, 16-methyl-octadecanoic acid, 18-methyl-eicosanoic acid, 20-methyl-docosanoic acid, 22-methyl-tetracosanoic acid, 24-methyl-hexacosanoic, 26-methyloctacosanoic acid, including 4-decenoic acid, caproleic acid, 4-dodecenoic acid, 5-dodecenoic acid, lauroleic acid, 4-tetradecenoic acid, 5-tetradecenoic acid, 9- tetradecenoic acid, palmitoleic acid, 6-octadecenoic acid, oleic acid, 9-octadecenoic acid, 11-octadecenoic acid, 9-eicosenoic acid, cis-11-eicosenoic acid, cetoleic acid, 13-docosenoic acid, 15-tetracosenoic acid, 17-hexacosenoic acid, 6,9,12,15- hexadecatetraenoic acid, linoleic acid, linolenic acid (18:3 n3), gamma linolenic acid (18:3 n6), α-eleostearic acid, gadoleic acid (20:1 ), α-eleostearic acid, punicic acid, 6,9,12,15-octadecatetraenoic acid, parinaric acid, 5,8,11,14-eicosatetraenoic acid, erucic acid, 5,8,11,14,17-eicosapentaenoic acid (EPA), 7,10,13,16,19-docosapentaenoic acid, 4,7,10,13,16,19-docosahexaenoic acid (DHA), α-hydroxylauric acid, α-hydroxymyristic acid, α-hydroxypalmitic acid, α-hydroxystearic acid, ω-hydroxyl auric acid, α-hydroxyarachic acid, 9-hydroxy-12-octadecenoic acid, ricinoleic acid, α-hydroxybehenic acid, 9-hydroxy-trans-10,12-octadecadienic acid, kamolenic acid, ipurolic acid, 9,10-dihydroxystearic acid, 12-hydroxystearic acid, oxalic acid, citric acid, phosphoric acid, malonic acid, succinic acid, glutaric acid, adipic acid, pimelic acid, suberic acid, azelaic acid, sebacic acid, D,L-malic acid, derivatives of any thereof, and combinations of any thereof.
7. The composition of any one of embodiments 1-6, wherein the emulsifier is selected from the group consisting of fluidized lecithins, deoiled lecithins, crude lecithins, and any combinations thereof.
8. The composition of any one of embodiments 1-7, wherein the emulsifier or the co-surfactant has a hydrophilic-lipophilic balance of between 10.0 and 18.0.
9. The composition of any one of the embodiments 1-8, wherein the co-surfactant is selected from the group consisting of ethoxylated monoglycerides, fatty acid ethoxylates, polyoxyethylene alkyl ethers, polyoxyethylene alkyl esters, sorbitan alkyl esters, propylene glycol, glycerol, glycols, polyoxyethylene sorbitan alkyl esters, glycerol esters, derivatives of any thereof and combinations of any thereof.
10.The composition of embodiment 9, wherein the propylene glycol and other glycols are obtained from a bio-based source as determined by ASTM International Radioisotope Standard Method D 6866.
11. The composition of any one of embodiments 1-10, wherein: the co-surfactant is selected from the group consisting of ethoxylated monoglycerides, fatty acid ethoxylate and a combination thereof; and the acidifier is propionic acid.
12. The composition of embodiment 11 , wherein the emulsifier is lecithin.
13. The composition of any one of embodiments 1-10, wherein the acidifier is propionic acid and the co-surfactant is selected from the group consisting of ethoxylated monoglycerides, fatty acid ethoxylates, sorbitan monoester, polyoxyethylene alkyl ethers, polyoxyethylene alkyl esters, sorbitan alkyl esters, polyoxyethylene sorbitan alkyl esters, glycerol esters, short chain fatty alcohols, acids, esters, glycerols, glycols, derivatives of any thereof, and combinations of any thereof, the composition further comprising a compound selected from the group consisting of triglycerides, diglycerides, sugar alcohols and combinations of any thereof.
14. The composition of embodiment 13, wherein the emulsifier is lecithin.
15. A process comprising: mixing an emulsifier with a co-surfactant, thus forming a blend; and mixing an acidifier and water with the blend, thus forming an adjuvant composition.
16. The process of embodiment 15, further comprising a compound, wherein upon contact of the adjuvant composition and the compound in water, the compound is dispersed in the water.
17. The process of embodiment 15 or 16, wherein the acidifier is selected from the group consisting of propionic acid, methyl acetic acid, acetic acid, lactic acid, fumaric acid, citric acid, phosphoric acid and combinations of any thereof.
18. The process of any one of embodiments 15-17, wherein the acts of mixing are performed at a temperature of at least 25 °C for a time period of at least 30 minutes.
19. The process of any one of embodiments 15-18, wherein the co-surfactant is selected from the group consisting of ethoxylated monoglycerides, fatty acid ethoxylates, polyoxyethylene alkyl ethers, polyoxyethylene alkyl esters, sorbitan alkyl esters, polyoxyethylene sorbitan alkyl esters, propylene glycol, glycerol, glycols glycerol esters, derivatives of any thereof, and combinations of any thereof.
20. The process of any one of embodiments 15-19, further comprising mixing a compound selected from the group consisting of vegetable fatty acids, soy fatty acids, derivatives of any thereof, and combinations of any thereof with the blend.
21. The process of any one of embodiments 15-20, wherein the emulsifier is selected from the group consisting of fluidized lecithins, deoiled lecithins, crude lecithins, and combination of any thereof.
22. The process of embodiment 19, wherein the propylene glycol and other glycols are obtained from a bio-based source as determined by ASTM International Radioisotope Standard Method D 6866.
23. The process of any one of embodiments 15-22, further comprising dispersing the adjuvant composition in water at a concentration of between 0.1 percent to 20 percent by weight.
24. The process of embodiment 23, further comprising applying between 0.1 gallons to 10.0 gallons of the adjuvant composition dispersed in the water per acre of land (0.94 liters/hectare to 93.5 liters/hectare).
25. The process of embodiment 20, wherein the vegetable fatty acids are selected from the group consisting of butyric acid, caproic acid, caprylic acid, capric acid, lauric acid, myristic acid, palmitic acid, stearic acid, arachic acid, behenic acid, lignoceric acid, hexacosanoic acid, octacosanoic acid, triacontanoic acid and n-dotriacontanoic acid, and those having an odd number of carbon atoms, such as propionic acid, n-valeric acid, enanthic acid, pelargonic acid, hendecanoic acid, tridecanoic acid, pentadecanoic acid, heptadecanoic acid, nonadecanoic acid, heneicosanoic acid, tricosanoic acid, pentacosanoic acid, heptacosanoic acid, isobutyric acid, isocaproic acid, isocaprylic acid, isocapric acid, isolauric acid, 11-methyldodecanoic acid, isomyristic acid, 13-methyl-tetradecanoic acid, isopalmitic acid, 15-methyl-hexadecanoic acid, isostearic acid, 17-methyloctadecanoic acid, isoarachic acid, 19-methyl-eicosanoic acid, a-ethyl-hexanoic acid, a-hexyldecanoic acid, a-heptylundecanoic acid, 2-decyltetradecanoic acid, 2-undecyltetradecanoic acid, 2-decylpentadecanoic acid, 2-undecylpentadecanoic acid, Fine oxocol 1800 acid (product of Nissan Chemical Industries, Ltd.), 6-methyl-octanoic acid, 8-methyl-decanoic acid, 10-methyl-dodecanoic acid, 12-methyl-tetradecanoic acid, 14-methyl-hexadecanoic acid, 16-methyl-octadecanoic acid, 18-methyl-eicosanoic acid, 20-methyl-docosanoic acid, 22-methyl-tetracosanoic acid, 24-methyl-hexacosanoic, 26-methyloctacosanoic acid, including 4-decenoic acid, caproleic acid, 4-dodecenoic acid, 5-dodecenoic acid, lauroleic acid, 4-tetradecenoic acid, 5-tetradecenoic acid, 9- tetradecenoic acid, palmitoleic acid, 6-octadecenoic acid, oleic acid, 9-octadecenoic acid, 11-octadecenoic acid, 9-eicosenoic acid, cis-11-eicosenoic acid, cetoleic acid, 13-docosenoic acid, 15-tetracosenoic acid, 17-hexacosenoic acid, 6,9,12,15- hexadecatetraenoic acid, linoleic acid, linolenic acid (18:3 n3), gamma linolenic acid (18:3 n6), α-eleostearic acid, gadoleic acid (20:1), α-eleostearic acid, punicic acid, 6,9,12,15-octadecatetraenoic acid, parinaric acid, 5,8,11,14-eicosatetraenoic acid, erucic acid, 5,8,11,14,17-eicosapentaenoic acid (EPA), 7,10,13,16,19-docosapentaenoic acid, 4,7,10,13,16,19-docosahexaenoic acid (DHA), α-hydroxylauric acid, α-hydroxymyristic acid, α-hydroxypalmitic acid, α-hydroxystearic acid, ω-hydroxylauric acid, α-hydroxyarachic acid, 9-hydroxy-12-octadecenoic acid, ricinoleic acid, α-hydroxybehenic acid, 9-hydroxy-trans-10,12-octadecadienic acid, kamolenic acid, ipurolic acid, 9,10-dihydroxystearic acid, 12-hydroxystearic acid, oxalic acid, citric acid, phosphoric acid, malonic acid, succinic acid, glutaric acid, adipic acid, pimelic acid, suberic acid, azelaic acid, sebacic acid, D,L-malic acid, derivatives of any thereof, and combinations of any thereof.
26. A product produced by the process of any one of embodiments 15-25.
27. A composition comprising: propionic acid; an emulsifier; vegetable fatty acids; water; and a compound selected from the group consisting of sorbitan monostearate, polyoxyethylene ester of rosin, polyoxyethylene dodecyl mono ether, polyoxyethylene-polyoxypropylene block copolymer, polyoxyethylene monolaurate, polyoxyethylene monohexadecyl ether, polyoxyethylene monooleate, polyoxyethylene mono(cis-9-octadecenyl)ether, polyoxyethylene monostearate, polyoxyethylene monooctadecyl ether, polyoxyethylene dioleate, polyoxyethylene distearate, polyoxyethylene sorbitan monolaurate polyoxyethylene sorbitan monooleate, polyoxyethylene sorbitan monopalmitate, polyoxyethylene sorbitan monostearate, polyoxyethylene sorbitan trioleate, polyoxyethylene sorbitan tristearate, polyglycerol ester of oleic acid, polyoxyethylene sorbitol hexastearate, polyoxyethylene monotetradecyl ether, polyoxyethylene sorbitol hexaoleate, fatty acids, tall-oil, hexaester with sorbitol, ethoxylated castor oil, ethoxylated soybean oil, ethoxylated polyoxyethylene sorbitol tetraoleate, fatty acids, mixed esters with glycerol and polyethylene glycol, alcohols, C9-C16 ethoxylated derivatives of any thereof, and combinations of any thereof.
28. The composition of embodiment 27, wherein the emulsifier is lecithin.
29. A composition consisting essentially of: an acidifier; an emulsifier; a co-surfactant; and water.
30. The composition of embodiment 29, wherein: the acidifier is propionic acid; the emulsifier is lecithin; and the co-surfactant is selected from the group consisting of ethoxylated monoglycerides, fatty acid ethoxylates, sorbitan monoester, polyoxyethylene alkyl ethers, polyoxyethylene alkyl esters, sorbitan alkyl esters, polyoxyethylene sorbitan alkyl esters, propylene glycol, glycerol, glycols derivatives of any thereof, and combinations of any thereof.
31. The composition of embodiment 29, wherein the emulsifier is lecithin.
32. The composition of any one of embodiments 1-14 or 27-31, or the product of embodiment 26, further comprising a biocide, fungicide, nematicide, herbicide, pesticide, insecticide or any combinations thereof.
33. A method of dispersing a compound, comprising: dispersing the compound and the composition of any one of embodiments 1-14 or 27-31, or the product of embodiment 26 in an aqueous solution.
34. The method of embodiment 33, wherein the compound is dispersed in an aqueous solution at a concentration of between 0.1 percent to 20 percent by weight.
35. The method of embodiment 33, further comprising applying the compound dispersed in an aqueous solution to soil, a plant or a combination thereof.
36. The method of embodiment 33, wherein the compound is dispersed at a level of between 0.1 gallons to 10.0 gallons per acre of land (0.94 liters/hectare to 93.5 liters/hectare).
37. The method of embodiment 33, wherein dispersing the compound comprises spraying the compound in an aqueous solution.
38. The method of embodiment 33, wherein the aqueous solution comprises hard water.
39. Use of the composition of any one of embodiments 1-14 or 27-31, or the product of embodiment 26 as an agent for bioremediation.
40. Use of the composition of any one of embodiments 1-14 or 27-31, or the product of embodiment 26 as an agent for application of fertilizers.
41. Use of the composition of any one of embodiments 1-14 or 27-31, or the product of embodiment 26 for dispersing a biocide, a fungicide, a nematacide, an herbicide, a pesticide, an insecticide or combinations of any thereof in an aqueous solution.
42. The composition of any one of embodiments 1-14, wherein the composition consists essentially of the recited embodiment elements.
43. The composition of any one of embodiments 1-14, wherein the composition consists of the recited embodiment elements.
44. The composition of any one of embodiments 1-14 or 27-31, wherein upon application of the composition and glyphosate to a plant, the composition and the glyphosate has a reduced phytotoxicity to the plant as compared to a conventional adjuvant.

### DESCRIPTION OF THE DRAWINGS

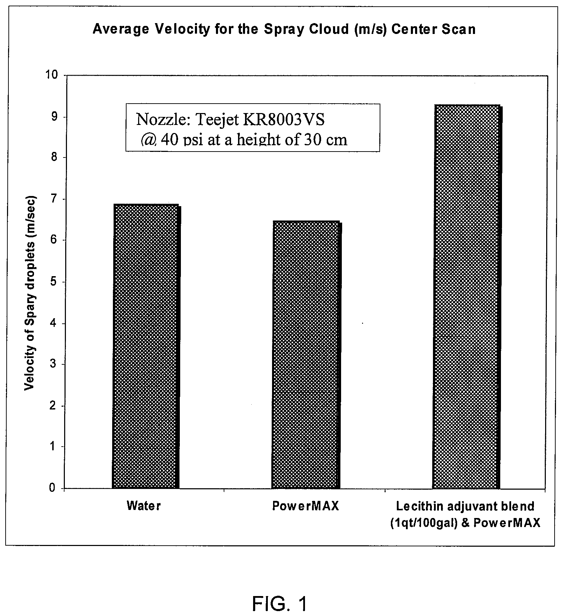

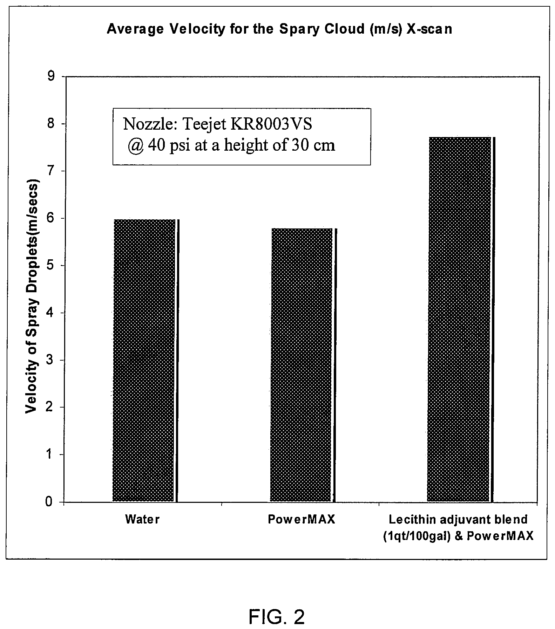

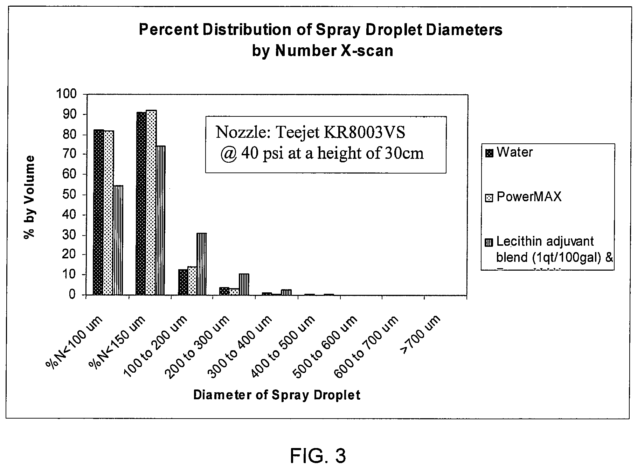

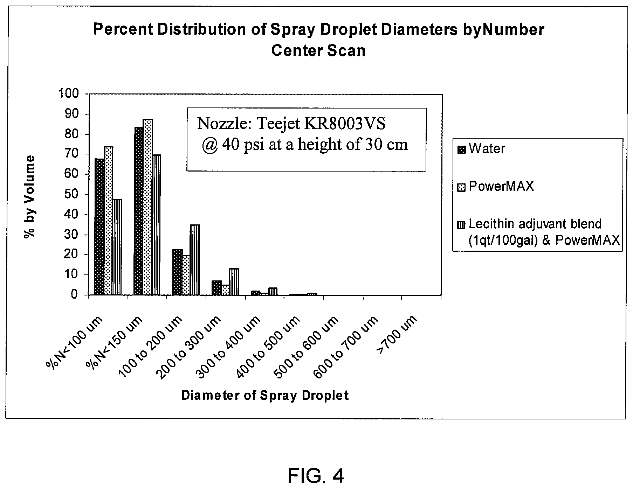

FIGS. 1-5 represent results of various studies performed on one embodiment of an adjuvant composition of the present invention.

### DETAILED DESCRIPTION

Following below various embodiments of the present disclosure and of the present invention are given with the understanding that the present invention is defined by the claims.

Adjuvants and surfactants are spray solution additives and are considered to be any product added to an agrochemical solution including, but not limited to, biocides, pesticides, herbicides, fungicides, and miticides to improve the performance of a spray solution containing the agrochemical solution. Examples of adjuvants include, but are not limited to, compatibility agents (used to aid mixing two or more herbicides in a common spray solution), drift retardants (used to decrease the potential for herbicide drift), suspension aids (used to aid mixing and suspending herbicide formulations in solution), spray buffers (used to change the spray solution acidity), and surfactants.

Because post emergence herbicide effectiveness is greatly influenced by plant factors such as age, size and the growing conditions of the plant encountered before application, herbicide performance can vary. One way to minimize the variations in post emergence herbicide performance is to use an adjuvant or surfactant in the spray solution. Adjuvants generally improve the effectiveness of post emergence herbicides.

An adjuvant is any additive used in conjunction with a pesticide to increase biological activity and/or to modify various physical properties of a spray solution containing the biocide, fungicide, nematicide, herbicide, pesticide, insecticide or combination of any thereof. Adjuvants and surfactants are added to spray solutions to improve the performance of crop protection compounds (herbicides). Adjuvants also play a key role in controlling the variables including, but not limited to, pesticide stability, solubility, compatibility, penetration, spreading, wetting, coverage, and drift. Surfactants act as an adjuvant that reduces surface tension between the spray solution droplets and the pest target's surface, thus, providing greater coverage.

Surfactants are added to oil adjuvants as emulsifiers to obtain an even distribution of the adjuvant in water. In one embodiment, the adjuvants can affect herbicide performance in many ways such as the spread of spray droplets on the leaf surface, the retention of spray droplets on the leaf, and penetration of the herbicide in the spray droplet through the plant cuticle. Surfactants form a "bridge" between chemicals that don't mix such as, for example, water and oil or water and the wax on a leaf surface. Surfactants lower the surface tension of spray droplets of the herbicide during application and allow for more complete spray coverage and sticking of the herbicide on the plant surface of the droplets. Some herbicides may also contain fatty acids to further improve herbicide retention and penetration. When there are many cations present in the water, as is the case with hard water, the cations including, without limitation, sodium, potassium, calcium, and magnesium can react with the herbicide, thus decreasing the uptake and effectiveness of the herbicide. For instance, a high level of calcium in water (hard water) reduces the control efficacy of glyphosates. Similarly, sodium bicarbonate reduces the efficacy of sethoxydim. A water conditioner, such as ammonium sulfate (which has utility as a nitrogen fertilizer) can negate this effect for glyphosate and sethoxydim. Also, herbicides are generally applied with fertilizers or fertilizer solutions, especially in agricultural settings. Compatibility agents are used to keep these herbicides in suspension. Most herbicides can be applied in nitrogen solutions without any compatibility problems, but compatibility may be poor when water contains high levels of various salts (hard water), or when the water is very cold.

In one embodiment, an adjuvant microemulsion that is based on bio-degradable and bio-renewable ingredients that can be easily mixed with a biological or chemical agent such as a biocide, fungicide, nematacide, herbicide, pesticide or insecticide that is to be dispersed in water prior to application is disclosed. In another embodiment, a method is described for mixing a composition comprising an acidifier, lecithin, water and a co-surfactant in water, dispersing the composition in water and applying the dispersed composition to soil.

Also, yet another embodiment describes a process for producing a microemulsion by mixing lecithin with a surfactant, thus forming a lecithin co-surfactant blend, and mixing an acidifier with the lecithin co-surfactant blend in presence of water, thus forming an adjuvant system. One aspect of this embodiment describes using vegetable fatty acids, soy fatty acids, derivatives of any thereof, and combinations of any thereof as additional components of the adjuvant system.

In another embodiment, a microemulsion comprising an acidifier, lecithin, water and a compound selected from the group consisting of triglycerides, diglycerides, sugar alcohols, ethoxylated monoglycerides, fatty acid ethoxylates, sorbitan monoester, polyoxyethylene alkyl ethers, polyoxyethylene alkyl esters, sorbitan alkyl esters, polyoxyethylene sorbitan alkyl esters, glycerol esters, short chain fatty alcohols, acids, esters, glycerols, glycols, derivatives of any thereof, and combinations of any thereof is disclosed.

In another embodiment, a microemulsion comprising an acidifier, lecithin, water and a compound selected from the group consisting of sorbitan monostearate, polyoxyethylene ester of rosin, polyoxyethylene dodecyl mono ether, polyoxyethylene-polyoxypropylene block copolymer, polyoxyethylene monolaurate, polyoxyethylene monohexadecyl ether, polyoxyethylene monooleate, polyoxyethylene mono(cis-9-octadecenyl)ether, polyoxyethylene monostearate, polyoxyethylene monooctadecyl ether, polyoxyethylene dioleate, polyoxyethylene distearate, polyoxyethylene sorbitan monolaurate polyoxyethylene sorbitan monooleate, polyoxyethylene sorbitan monopalmitate, polyoxyethylene sorbitan monostearate, polyoxyethylene sorbitan trioleate, polyoxyethylene sorbitan tristearate, polyglycerol ester of oleic acid, polyoxyethylene sorbitol hexastearate, polyoxyethylene monotetradecyl ether, polyoxyethylene sorbitol hexaoleate, fatty acids, hexaester with sorbitol, ethoxylated castor oil, ethoxylated soybean oil, ethoxylated polyoxyethylene sorbitol tetraoleate, fatty acids, tall-oil, mixed esters with glycerol and polyethylene glycol, alcohols, C9-16 and ethoxylated derivatives of any thereof, and combinations of any thereof is disclosed.

In yet other embodiments, adjuvant systems including microemulsions that may be applied as fertilizer concentrates, in bioremediation applications, in biocide applications and as water conditioning agents are disclosed. One aspect of this embodiment describes the use of bio-based and bio-renewal components for preparing such adjuvant systems.

Microemulsions are clear, isotropic, thermodynamically stable liquid mixtures including oil, water and a surfactant. The water phase may contain salt(s) and/or other ingredients. Microemulsions may be prepared from a large number of components. In contrast to ordinary emulsions, microemulsions form upon simple mixing of the components and do not require high shear conditions. In ternary systems, such as microemulsions, where two immiscible phases (water and 'oil') are present next to the surfactant phase, the surfactant molecules form a monolayer at the interface between oil and water, with the hydrophobic tails of the surfactant molecules dissolved in the oil phase and the hydrophilic head groups in the aqueous phase. Comparable to the binary systems (water/surfactant or oil/surfactant), self-assembled structures of different morphologies can be obtained ranging from (inverted) spherical and cylindrical micelles to lamellar phases and bi-continuous microemulsions. A water-in-oil microemulsion is an optically transparent mixture including oil, water, and surfactant. Water droplets are in a continuous oil phase stabilized by surfactant.

In one embodiment, an adjuvant system is a microemulsion and may be used as a surfactant to enhance the activity and effectiveness of agricultural chemicals, such as herbicides, defoliants, desiccants, plant growth regulators, insecticides, fungicides, foliar nutrients, acaracides, and combinations of any thereof. The adjuvant system provides more uniform coverage by decreasing surface tension of spray solutions, thus, aiding in penetration. The adjuvant system may also be used as an acidifying agent to lower pH of spraying solutions, thus, preventing alkaline hydrolysis of pesticides sensitive to high pH.

In one embodiment, a lecithin co-surfactant blend is produced. Such a blend is produced by blending lecithin with a surfactant having a HLB in the range of about 10.0 to 18.0, optionally, in the presence of a co-solvent including, but not limited to, short chain fatty alcohols, acids, ester, glycerols, glycols or any combinations thereof. The co-surfactant blend may include ethoxylated monoglycerides or fatty acid ethoxylate, soybean oil, propylene glycol or any combination thereof. Several surfactants may be used for the blend such as, for example, polyoxyethylene alkyl esters, sorbitan alkyl esters, polyoxyethylene sorbitan alkyl esters, glycerol esters, sugar esters, poly-glycerol esters, derivatives of any thereof or combinations of any thereof. In another embodiment, surfactants which have HLB value of 12 to 16 may be used. The surfactant blend may be produced by mixing lecithin, such as for example fluidized lecithin, crude lecithin, deoiled lecithin or any combination thereof, with a composition containing the surfactants and co-solvents. In one embodiment, the range of such blends may comprise lecithin in a concentration of between about 50 percent by weight to about 90 percent by weight with the remainder of the blend comprising a co-surfactant.

The lecithin co-surfactant blend may be intermixed with an acidifier in presence of water to produce an adjuvant system. In one embodiment, levels of such blends that may be used are between about 30 percent to about 45 percent by weight of the acidifier in water, wherein the acidifier in water is added to the lecithin co-surfactant blend.

The lecithin co-surfactant blend or the adjuvant system with the lecithin co-surfactant may be achieved by a variety of techniques including, but not limited to, blending, mixing, shear mixing, turbulizing, stirring, homogenizing or any combinations thereof. In one embodiment, mixing times that may be used for producing these blends may be at least 30 minutes. In another embodiment, a time period of about 30 minutes to about 3 hours at temperatures sufficient to produce uniform mixing may also be used. In one embodiment, temperatures between 25°C to 60°C may be used. Such conditions are a result of cause variable effect and may be optimized based on the type and concentrations of co-surfactants used to produce the blends.

The co-surfactant used may also contain propylene glycol, ethylene glycol, glycerol, short chain fatty acids, esters or any combinations thereof. The glycols or glycerol used herein may be of a bio-based origin. Various embodiments of the present disclosure also relate to a biobased glycerol, a biobased propylene glycol and a biobased ethylene glycol that are traditionally derived from petrochemical sources. In particular, biobased propylene glycol and biobased ethylene glycol can be produced by hydrogenolysis of polyols derived from biological sources (i.e., bioderived). The product mixture from the hydrogenolysis of bioderived polyols and the products produced therefrom may be differentiated from petroleum derived products, for example, by their carbon isotope ratios using ASTM International Radioisotope Standard Method D 6866. As used herein, the term "bioderived" means derived from or synthesized by a renewable biological feedstock, such as, for example, an agricultural, forestry, plant, bacterial, or animal feedstock.

In one embodiment, the adjuvant system may be a microemulsion comprising a first ingredient and at least one other secondary ingredient. In one embodiment, the first ingredient may be an acidifier. In various embodiments, the secondary ingredients may be at least one of the following compounds: an emulsifier, a co-surfactant, a vegetable fatty acid, a soy fatty acid, alcohols, acids, esters, glycerols, glycols, water, derivatives of any thereof, or combinations of any thereof. In another embodiment, the adjuvant system is intermixed with a biological agent, a chemical agent or a fertilizer to enhance its application properties to plant or soil material.

In one embodiment, the first ingredient may be an acidifier such as, for example, propionic acid or any other effective acidifier agent. Certain aspects of this embodiment may use any other suitable acid including, but not limited to, methyl acetic acid, acetic acid, lactic acid, fumaric acid, citric acid, phosphoric acid, ascorbic acid or any combination there of as the acidifier agent.

Other embodiments use secondary ingredients such as vegetable fatty acids (e.g., soy fatty acids), derivatives of any thereof and combinations of any thereof. Any suitable plant based fatty acids including, without limitation, butyric acid, caproic acid, caprylic acid, capric acid, lauric acid, myristic acid, palmitic acid, stearic acid, arachic acid, behenic acid, lignoceric acid, hexacosanoic acid, octacosanoic acid, triacontanoic acid and n-dotriacontanoic acid, and those having an odd number of carbon atoms, such as propionic acid, n-valeric acid, enanthic acid, pelargonic acid, hendecanoic acid, tridecanoic acid, pentadecanoic acid, heptadecanoic acid, nonadecanoic acid, heneicosanoic acid, tricosanoic acid, pentacosanoic acid, heptacosanoic acid, isobutyric acid, isocaproic acid, isocaprylic acid, isocapric acid, isolauric acid, 11-methyldodecanoic acid, isomyristic acid, 13-methyl-tetradecanoic acid, isopalmitic acid, 15-methyl-hexadecanoic acid, isostearic acid, 17-methyloctadecanoic acid, isoarachic acid, 19-methyl-eicosanoic acid, a-ethyl-hexanoic acid, a-hexyldecanoic acid, a-heptylundecanoic acid, 2-decyltetradecanoic acid, 2-undecyltetradecanoic acid, 2-decylpentadecanoic acid, 2-undecylpentadecanoic acid, Fine oxocol 1800 acid (product of Nissan Chemical Industries, Ltd.), 6-methyl-octanoic acid, 8-methyl-decanoic acid, 10-methyl-dodecanoic acid, 12-methyl-tetradecanoic acid, 14-methyl-hexadecanoic acid, 16-methyl-octadecanoic acid, 18-methyl-eicosanoic acid, 20-methyl-docosanoic acid, 22-methyl-tetracosanoic acid, 24-methyl-hexacosanoic, 26-methyloctacosanoic acid including 4-decenoic acid, caproleic acid, 4-dodecenoic acid, 5-dodecenoic acid, lauroleic acid, 4-tetradecenoic acid, 5-tetradecenoic acid, 9-tetradecenoic acid, palmitoleic acid, 6-octadecenoic acid, oleic acid, 9-octadecenoic acid, 11-octadecenoic acid, 9-eicosenoic acid, cis-11-eicosenoic acid, cetoleic acid, 13-docosenoic acid, 15-tetracosenoic acid, 17-hexacosenoic acid, 6,9,12,15-hexadecatetraenoic acid, linoleic acid, linolenic acid (18:3 n3), gamma linolenic acid (18:3 n6), α-eleostearic acid, gadoleic acid (20:1), α-eleostearic acid, punicic acid, 6,9,12,15-octadecatetraenoic acid, parinaric acid, 5,8,11,14-eicosatetraenoic acid, erucic acid, 5,8,11,14,17-eicosapentaenoic acid (EPA), 7,10,13,16,19-docosapentaenoic acid, 4,7,10,13,16,19-docosahexaenoic acid (DHA), α-hydroxylauric acid, α-hydroxymyristic acid, α-hydroxypalmitic acid, α-hydroxystearic acid, ω-hydroxylauric acid, α-hydroxyarachic acid, 9-hydroxy-12-octadecenoic acid, ricinoleic acid, α-hydroxybehenic acid, 9-hydroxy-trans-10,12-octadecadienic acid, kamolenic acid, ipurolic acid, 9,10-dihydroxystearic acid, 12-hydroxystearic acid, oxalic acid, citric acid, phosphoric acid, malonic acid, succinic acid, glutaric acid, adipic acid, pimelic acid, suberic acid, azelaic acid, sebacic acid, D,L-malic acid, or combinations of any thereof and the like may be used.

In other embodiments, the secondary ingredients may be dissolved in water. Generally, the microemulsion adjuvant compositions are provided separately and a penetrant (such as a co-surfactant) is combined when used. The final compositions may be diluted in water and sprayed or poured onto the soil. In one embodiment, ingredients may be present in one phase for ease of use and are ready to deliver to the soil by diluting with water. In one embodiment, concentrations of the first ingredient in the aqueous solution may range from 0.1 to 20 percent. It will be apparent by those of ordinary skill in the art that the percentages and methods used for application will vary with the type of crop, type of control desired, and/or other conditions and may be optimized using routine experimentation. The co-surfactants used may also include without limitation, for example, polyoxyethylene derivatives of sorbitan monoester, such as a polyethylene oxide of sorbitan fatty acid esters (e.g., sorbitan monopalmitate, sorbitan monooleate, sorbitan monostearate). These compounds are available under the trade name of "TWEEN" of Uniqema Company (a Delaware Corporation) such as TWEEN 60 or TWEEN 80. Any other suitable surfactant in the desired HLB range may be used. Such surfactants are available from numerous suppliers such as, for example, BASF (Florham Park, NJ), Lonza (Allendale, NJ), Stepan (Northfield, IL), Kerry (Beloit, WI).

In another embodiment, mixed surfactants (surfactant mixtures) in the given HLB range of 10-18 may be used to enhance the solubilization properties of the adjuvant system, which could be used to improve the efficacy and penetration of the herbicide.

Another embodiment enables the use of hard (e.g., well) water for applying a herbicide to soil. Dispersibility of the composition of the present invention in hard water is important because of the cost associated with treating water to reduce its hardness. Well water high in mineral (e.g., calcium, magnesium and iron) content may also be used. The adjuvant system described herein, upon mixing with the herbicide may be used at rates such as from about 6 pounds per acre (6.7 kg per hectare) to about 300 pounds per acre (336.3 kg per hectare) upon dilution in water. In certain embodiments, the adjuvant system may be used at rates of one pound per acre (1.1 kg per hectare) or less depending upon the amount necessary to attain effective control by any application technique in which the adjuvant system and biocides are brought in mutual contact, such as to the foliage of the plant or grass, to the soil itself, or other plant pest desired to be controlled.

In another embodiment, the compositions of the present disclosure may be used in conjunction with various organic fertilizers such as those described in United States Patent Application 11/549,470 filed October 13, 2006, entitled "Fertilizer Compositions and Methods of Using,".

The teachings of this disclosure may also be used in conjunction with any biological or chemical agent including, but not limited to, a biocide, fungicide, nematacide, herbicide, pesticide, insecticide or combination of any thereof that may be dispersed in water prior to application. For instance, substances used in crop protection which may be dispersed in water prior to application may be developed by the teachings of this disclsoure. A blend of lecithin and a co-surfactant may be prepared and blended with the biological or chemical agent that is required for application to produce a stable dispersion in water. In one embodiment, the dispersion may also be dispersed in hard water.

In one embodiment, a composition consists essentially of an acidifier, an emulsifier, a co-surfactant and water.

In another embodiment, a process for producing a product includes mixing an emulsifier with a co-surfactant, thus forming a blend. The blend is mixed with an acidifier and water, thus forming an adjuvant composition.

In a further embodiment, a composition comprises propionic acid, an emulsifier, water and a compound selected from the group consisting of triglycerides, diglycerides, sugar alcohols, ethoxylated monoglycerides, fatty acid ethoxylates, sorbitan monoester, polyoxyethylene alkyl ethers, polyoxyethylene alkyl esters, sorbitan alkyl esters, polyoxyethylene sorbitan alkyl esters, glycerol esters, short chain fatty alcohols, acids, esters, glycerols, glycols, derivatives of any thereof, and combinations of any thereof.

In one embodiment, a composition includes propionic acid, an emulsifier, a vegetable fatty acid, water and a compound selected from the group consisting of sorbitan monostearate, polyoxyethylene ester of rosin, polyoxyethylene dodecyl mono ether, polyoxyethylene-polyoxypropylene block copolymer, polyoxyethylene monolaurate, polyoxyethylene monohexadecyl ether, polyoxyethylene monooleate, polyoxyethylene mono(cis-9-octadecenyl)ether, polyoxyethylene monostearate, polyoxyethylene monooctadecyl ether, polyoxyethylene dioleate, polyoxyethylene distearate, polyoxyethylene sorbitan monolaurate polyoxyethylene sorbitan monooleate, polyoxyethylene sorbitan monopalmitate, polyoxyethylene sorbitan monostearate, polyoxyethylene sorbitan trioleate, polyoxyethylene sorbitan tristearate, polyglycerol ester of oleic acid, polyoxyethylene sorbitol hexastearate, polyoxyethylene monotetradecyl ether, polyoxyethylene sorbitol hexaoleate, fatty acids, tall-oil, hexaester with sorbitol, ethoxylated castor oil, ethoxylated soybean oil, ethoxylated polyoxyethylene sorbitol tetraoleate, fatty acids, mixed esters with glycerol and polyethylene glycol, alcohols, C9-C16 ethoxylated derivatives of any thereof, and combinations of any thereof.

In yet a further embodiment, a composition includes propionic acid, an emulsifier, a vegetable fatty acid, water and a compound selected from the group consisting of sorbitan monostearate, polyoxyethylene ester of rosin, polyoxyethylene dodecyl mono ether, polyoxyethylene-polyoxypropylene block copolymer, polyoxyethylene monolaurate, polyoxyethylene monohexadecyl ether, polyoxyethylene monooleate, polyoxyethylene mono(cis-9-octadecenyl)ether, polyoxyethylene monostearate, polyoxyethylene monooctadecyl ether, polyoxyethylene dioleate, polyoxyethylene distearate, polyoxyethylene sorbitan monolaurate polyoxyethylene sorbitan monooleate, polyoxyethylene sorbitan monopalmitate, polyoxyethylene sorbitan monostearate, polyoxyethylene sorbitan trioleate, polyoxyethylene sorbitan tristearate, polyglycerol ester of oleic acid, polyoxyethylene sorbitol hexastearate, polyoxyethylene monotetradecyl ether, polyoxyethylene sorbitol hexaoleate, fatty acids, tall-oil, hexaester with sorbitol, ethoxylated castor oil, ethoxylated soybean oil, ethoxylated polyoxyethylene sorbitol tetraoleate, fatty acids, mixed esters with glycerol and polyethylene glycol, alcohols, C9-C16 ethoxylated derivatives of any thereof, and combinations of any thereof.

In an additional embodiment, a composition consists essentially of propionic acid, an emulsifier, water and a compound selected from the group consisting of ethoxylated monoglycerides, fatty acid ethoxylates, sorbitan monoester, polyoxyethylene alkyl ethers, polyoxyethylene alkyl esters, sorbitan alkyl esters, polyoxyethylene sorbitan alkyl esters, propylene glycol, glycerol, glycols derivatives of any thereof, and combinations of any thereof.

In one embodiment, a composition includes an emulsifier, and an ethoxylated monoglyceride, a fatty acid ethoxylate or a combination thereof. The composition further includes propionic acid and water.

In various embodiments, the emulsifier comprises lecithin. Other embodiments include the use of the compositions of the present disclosure for dispersing a compound in water.

### EXAMPLES

The following examples are provided to further describe the invention.

### Example 1.

This example describes one embodiment of a method of making AN adjuvant formulation. An adjuvant blend was prepared by mixing YELKIN T brand lecithin (a crude lecithin available from Archer Daniels Midland Company, Decatur, IL) in an amount of 35% by weight; propionic acid (available from Fisher Scientific, Fairlawn, NJ) in an amount of 35% by weight; vegetable fatty acids in an amount of 3.5% (available from Chemtura, Middlebury, CT) by weight of lecithin with fatty acid ethoxylate (Ninex MT-610 available from Stepan, Northfield, IL,) 10% by weight.

The ingredients were mixed and heated to 50°C under constant stirring for between 30 minutes to 60 minutes. 20% water by weight was slowly added to the mixture with constant stirring for about one half hour. The fatty acid ethoxylate used in this example is an agricultural emulsifier and is approved by the EPA as inert ingredient under U.S. EPA §40 CFR 180.910, U.S. EPA §21 CFR 176.210, 175.105. A stable microemulsion was obtained that may be used as an agricultural adjuvant.

### Example 2.

This example describes one embodiment of a method of making an adjuvant concentrate formulation. An adjuvant concentrate blend was prepared by mixing YELKIN SS brand lecithin (a bleached, fluidized lecithin available from Archer Daniels Midland Company, Decatur, IL) in an amount of 35% by weight; and fatty acid ethoxylate (Ninex MT-610 available from Stepan, Northfield, IL) 10% by weight.

The ingredients were mixed and heated to 50°C under constant stirring for between 30 minutes to 60 minutes. 20% water by weight of the mixture and 35% propionic acid by weight of the mixture (available from Fisher Scientific, Fairlawn, NJ) were slowly added followed by 20% water by weight on constant stirring at 50°C for about one half hour. The fatty acid ethoxylate used in this example is a non-APE agricultural emulsifier and is approved by the EPA as inert ingredient under U.S. EPA §40 CFR 180.910, U.S. EPA §21 CFR 176.210, 175.105. A stable microemulsion was obtained that may be used as an agricultural adjuvant.

### Example 3.

This example describes one embodiment of a method of making an adjuvant concentrate formulation. An adjuvant concentrate blend was prepared by mixing YELKIN TS brand lecithin (fluidized lecithin available from Archer Daniels Midland Company, Decatur, IL) in an amount of 35% by weight; and fatty acid ethoxylate (Ninex MT-610 available from Stepan, Northfield, IL) 10% by weight.

The ingredients were mixed and heated to 50°C under constant stirring for between 30 minutes to 60 minutes. 35% propionic acid (available from Fisher Scientific, Fairlawn, NJ) by weight of the mixture were added slowly followed by 20% water by weight on constant stirring at 50°C for about one half hour. The fatty acid ethoxylate used in this example is a non-APE agricultural emulsifier and is approved by the EPA as inert ingredient under U.S. EPA §40 CFR 180.910, U.S. EPA §21 CFR 176.210, 175.105. A stable microemulsion was obtained that may be used as an agricultural adjuvant.

### Example 4.

The composition produced by any of examples 1, 2 or 3 is diluted with an herbicide in water, optionally hard water, to form an emulsion comprising between 0.1 percent to 1.0 percent by weight of the microemulsion in water. The microemulsion may be applied in the amount of 0.1 gallons to 10.0 gallons per acre (0.94 liters to 93.5 liters per hectare) and in some embodiments may be applied in the amount of 0.1 gallons to 2.0 gallons per acre (0.94 liters to 18.7 liters per hectare) of land area, depending upon the biocide control required.

### Example 5.

The surface tension of the composition of Example 1 in different dilution concentrations was determined. The dilution concentrations are listed in Table 1. The surface tension was measured using a CSC-DuNouy Tensiometer (ASTM D1331). The contact angle of a drop of each dilution on parafilm was measured with a Ramé-Hart Contact Angle Goniometer. The angle of each drop relative to the surface of the parafilm was measured at 30, 60 and 90 seconds after formation of the drop.

**Table 1.**

| Dilution Concentration % | Surface Tension dynes/cm | Contact Angle on parafilm, degrees | |
|---|---|---|---|
| | | 60 sec | 90 sec |
| 0.01 | 45.9 | 87 | 87 |
| 0.10 | 41.5 | 58 | 55 |
| 0.25 | 38.8 | 58 | 52 |

The contact angle (CA) is a profile measurement of a drop of liquid in contact with a solid surface. When a surfactant or wetting agent is introduced into the liquid, the surface tension is reduced and the liquid droplet becomes flatter. The lower the contact angle produced by the surfactant, the greater the spreading and coverage properties of the liquid including such surfactant. Water has a contact angle of about 93 degrees, and a typical surfactant influences the contact angle from about 30-45 degrees. The contact angle of a crop oil concentrate or methylated seed oil is about 58 and the adjuvant composition of this example has similar surface wetting properties. Further, the surface tension data of the adjuvant composition of this example is typical of a conventional wetting agent (i.e., 30-50 dynes/cm).

### Example 6.

The ability of the composition of Example 1 to function as an adjuvant with ROUNDUP POWERMAX brand herbicide, available from the Monsanto Company was determined. In this example, the compositions studied were water, ROUNDUP POWERMAX brand herbicide and a mixture of ROUNDUP POWERMAX brand herbicide with the composition of Example 1.

The nozzle used in this example was a Teejet XR8003VS. The compositions were up made up with tap water at 20°C. Each composition was sprayed through the nozzle tip at 40 psi (pounds per square inch) (2.758 bar) at a height of 30 cm (centimeters) above the probe volume of the Aerometrics PDPA laser system. The size range of droplets scanned were between 25.7 µm (micrometers) - 900.0 µm. The voltage for the photo-multiplier tube (PMT) was set to 325 V (volts). Two types of measurements were made for each treatment under the x-y axis intersection point, and a scan down the length of the long x-axis to yield an overall global sample.

Results of the studies of this example are presented in FIGS. 1-5. The average velocity for the entire spray cloud (m/s) measured using a PDPA-100D system are shown in FIGS. 1 and 2. The data clearly shows the effect that the adjuvant composition of this example has on atomization wherein the adjuvant composition performs in a manner similar to conventional wetting agents. The effect of compositions of this example is clearly seen in the number median diameter (NMD), velocity and drift potential as estimated by percent volume <150µm. In this example, the adjuvant composition clearly elevated the NMD as compared to water and POWERMAX brand herbicide, raised the spray cloud velocity and reduced the spray volume contained in droplets that are <150µm. The adjuvant composition further reduced the relative span as illustrated in FIGS. 3 and 4.

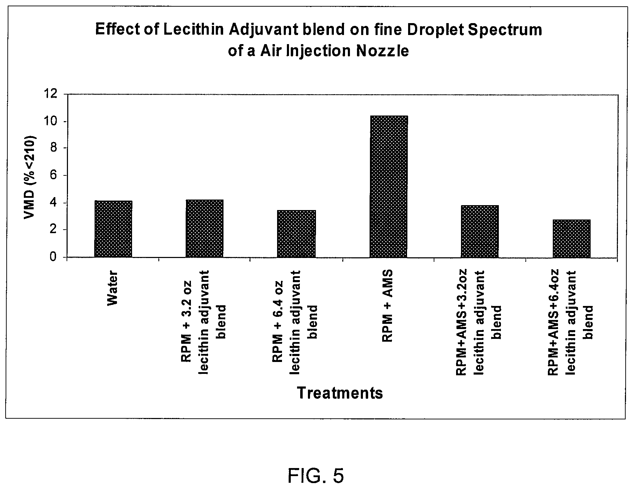

The data indicates that the percentage of droplets by volume of the ROUNDUP POWERMAX brand herbicide by itself as compared to the herbicide with the adjuvant composition of the present disclsoure was as follows: for droplets less than <150µm, the adjuvant composition reduced such droplets by a factor of two; and for droplets less than <100µm, the adjuvant composition reduced such droplets by a factor of 3. As illustrated in FIG. 5, the droplet spectrum of the air injection nozzle is greatly improved in the presence of the adjuvant composition of this example. The data indicates that use of the adjuvant composition will result in better coverage of the agrochemical of the leaf, better penetration of the agrochemical in a canopy, as well as better efficacy, adhesion and retention of the agrochemical to the surface of the leaf.

### Example 7.

In this example, the effectiveness of the composition of Example 1 as an adjuvant with glyphosate on soybeans was evaluated. This example used randomized block testing and was performed in three replications with plot sizes of 10 by 25 feet (3.05 by 7.62 meters).

The adjuvant composition of this example is a multifunctional lecithin based product that improves the performance of agricultural chemicals. The adjuvant composition is a strong acidifier and a good wetter/spreader at rates of at least one pint per 100 gallons (0.47 liters per 378.5 liters) of water. The adjuvant composition of this example has water conditioning properties and also serves as a drift control agent when applied at a rate of one quart per gallon (0.25 liters per liter), as well as enabling improved coverage and deposition of the agricultural chemical with which the adjuvant composition is used. Another property of the adjuvant composition of this example is that the lecithin contained therein enables the agricultural chemical to penetrate the leaf cuticle and maximizes the penetration of the agricultural chemical through the waxy layer of the foliage while maintaining the integrity of the plant's protective wax layer. This improves the performance of the agricultural chemical which function by penetrating into the plant while greatly reducing burn potential to the plant.

The results of this example presented in Table 2 indicated that the adjuvant composition applied with glyphosate provided very good weed control and indicated weed kill for foxtail, velvet leaf, common waterhemp and common ragweed to be 99%, 99%, 97% and 99%, respectively after 21 days. This example also indicated that the adjuvant composition was very safe for soybeans since the percent phytotoxicity was determined to be 5% and 1.7% after 7 and 14 days, respectively, after application, and the percent phytotoxicity was further measured to be 0% at 21 and 28 days after application.

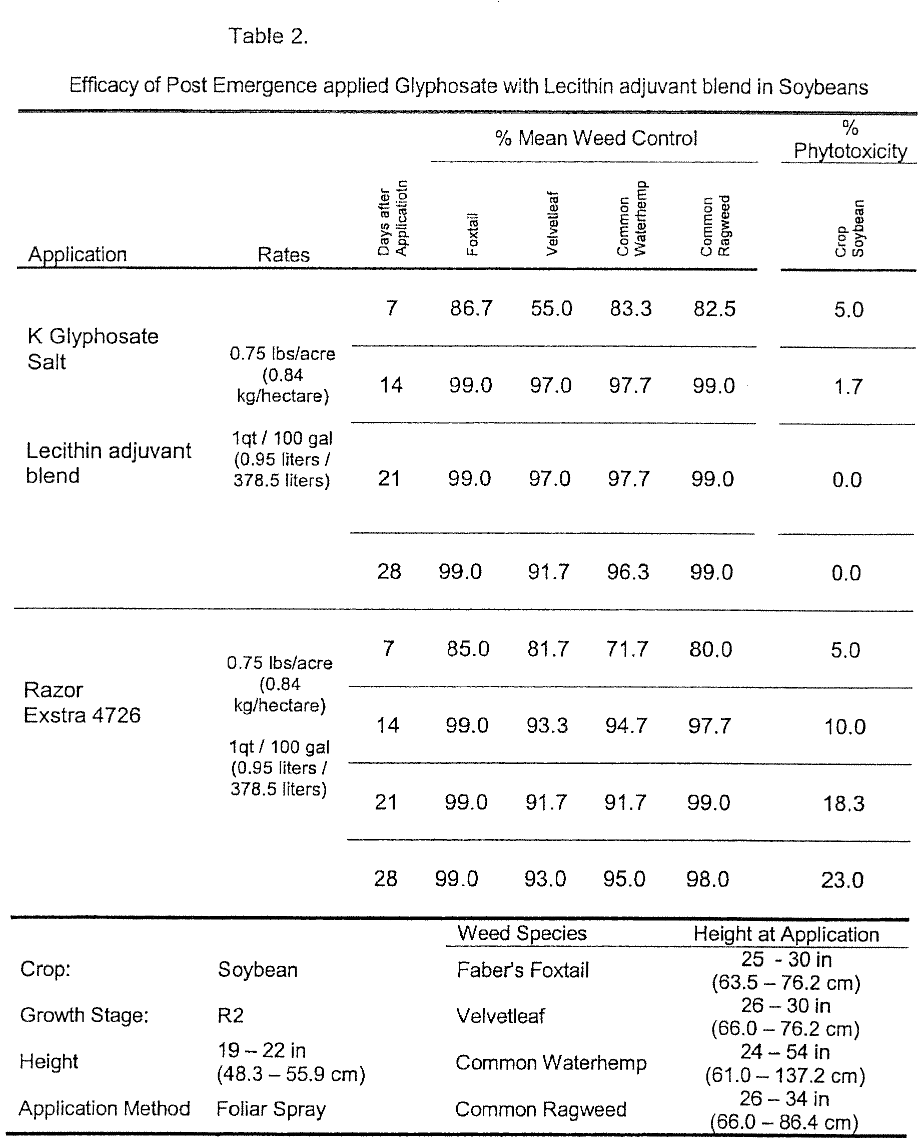

As Table 2 indicates, the adjuvant composition of this example has a reduced phytotoxicity effect as compared to the commercially available adjuvant Razor Exstra 4726.

## Claims

1. A microemulsion comprising:
an acidifier selected from the group consisting propionic acid, acetic acid, lactic acid, fumaric acid, citric acid, phosphoric acid and combinations of any thereof;
an emulsifier selected from the group consisting of fluidized lecithins, deoiled lecithins, crude lecithins, and any combinations thereof;
a co-surfactant selected from the group consisting of sorbitan monostearate, polyoxyethylene ester of rosin, polyoxyethylene dodecyl mono ether, polyoxyethylene-polyoxypropylene block copolymer, polyoxyethylene monolaurate, polyoxyethylene monohexadecyl ether, polyoxyethylene monooleate, polyoxyethylene mono(cis-9-octadecenyl)ether, polyoxyethylene monostearate, polyoxyethylene monooctadecyl ether, polyoxyethylene dioleate, polyoxyethylene distearate, polyoxyethylene sorbitan monolaurate polyoxyethylene sorbitan monooleate, polyoxyethylene sorbitan monopalmitate, polyoxyethylene sorbitan monostearate, polyoxyethylene sorbitan trioleate, polyoxyethylene sorbitan tristearate, polyglycerol ester of oleic acid, polyoxyethylene sorbitol hexastearate, polyoxyethylene monotetradecyl ether, polyoxyethylene sorbitol hexaoleate, tall-oil, hexaester with sorbitol, ethoxylated castor oil, ethoxylated soybean oil, ethoxylated polyoxyethylene sorbitol tetraoleate, mixed esters with glycerol and polyethylene glycol, alcohols, and combinations of any thereof; and
water,
further comprising a compound selected from the group consisting of vegetable fatty acids, soy fatty acids, and combinations of any thereof,
wherein the microemulsion is a clear, isotropic thermodynamically stable liquid, and
wherein the vegetable fatty acids are selected from the group consisting of caprylic acid, capric acid, lauric acid, myristic acid, palmitic acid, stearic acid, arachic acid, behenic acid, lignoceric acid, hexacosanoic acid, octacosanoic acid, triacontanoic acid and n-dotriacontanoic acid, and those having an odd number of carbon atoms, such as, n-valeric acid, enanthic acid, pelargonic acid, hendecanoic acid, tridecanoic acid, pentadecanoic acid, heptadecanoic acid, nonadecanoic acid, heneicosanoic acid, tricosanoic acid, pentacosanoic acid, heptacosanoic acid, isobutyric acid, isocaproic acid, isocaprylic acid, isocapric acid, isolauric acid, 11-methyldodecanoic acid, isomyristic acid, 13-methyl-tetradecanoic acid, isopalmitic acid, 15-methyl-hexadecanoic acid, isostearic acid, 17-methyloctadecanoic acid, isoarachic acid, 19-methyl-eicosanoic acid, a-ethyl-hexanoic acid, a-hexyldecanoic acid, a-heptylundecanoic acid, 2-decyitetradecanoic acid, 2-undecyltetradecanoic acid, 2-decylpentadecanoic acid, 2-undecylpentadecanoic acid, 6-methyl-octanoic acid, 8-methyl-decanoic acid, 10-methyl-dodecanoic acid, 12-methyl-tetradecanoic acid, 14-methyl-hexadecanoic acid, 16-methyl-octadecanoic acid, 18-methyl-eicosanoic acid, 20-methyl-docosanoic acid, 22-methyl-tetracosanoic acid, 24-methyl-hexacosanoic, 26-methyloctacosanoic acid, including 4-decenoic acid, caproleic acid, 4-dodecenoic acid, 5-dodecenoic acid, lauroleic acid, 4-tetradecenoic acid, 5-tetradecenoic acid, 9-tetradecenoic acid, palmitoleic acid, 6-octadecenoic acid, oleic acid, 9-octadecenoic acid, 11-octadecenoic acid, 9-eicosenoic acid, cis-11-eicosenoic acid, cetoleic acid, 13-docosenoic acid, 15-tetracosenoic acid, 17-hexacosenoic acid, 6,9,12,15-hexadecatetraenoic acid, linoleic acid, linolenic acid (18:3 n3), gamma linolenic acid (18:3 n6), a-eleostearic acid, gadoleic acid (20:1), a-eleostearic acid, punicic acid, 6,9,12,15-octadecatetraenoic acid, parinaric acid, 5,8,11,14-eicosatetraenoic acid, erucic acid, 5,8,11,14,17-eicosapentaenoic acid (EPA), 7,10,13,16,19-docosapentaenoic acid, 4,7,10,13,16,19-docosahexaenoic acid (DHA), a-hydroxylauric acid, α-hydroxymyristic acid, a-hydroxypalmitic acid, a-hydroxystearic acid, omega-hydroxylauric acid, a-hydroxyarachic acid, 9-hydroxy-12-octadecenoic acid, ricinoleic acid, a-hydroxybehenic acid, 9-hydroxy-trans-10,12-octadecadienic acid, kamolenic acid, ipurolic acid, 9,10-dihydroxystearic acid, 12-hydroxystearic acid, and combinations of any thereof.

2. The microemulsion of claim 1, wherein the emulsifier or the co-surfactant has a hydrophilic-lipophilic balance of between 10.0 and 18.0.

3. The microemulsion of any one of claims 1 or 2, wherein the acidifier is lactic acid.

4. A process for producing a microemulsion according to claim 1 comprising:
mixing an emulsifier selected from the group consisting of fluidized lecithins, deoiled lecithins, crude lecithins, and any combinations thereof with a co-surfactant, thus forming a blend; and
mixing an acidifier and water with the blend, thus forming the microemulsion,
further comprising mixing a compound selected from the group consisting of vegetable fatty acids, soy fatty acids, and combinations of any thereof with the blend.

5. The process of claim 4, wherein the acts of mixing are performed at a temperature of at least 25 °C for a time period of at least 30 minutes.

6. The process of any one of claims 4 or 5, further comprising dispersing the microemulsion in water at a concentration of between 0.1 percent to 20 percent by weight.

7. A microemulsion according to claim 1, comprising:
propionic acid as acidifier.

8. The microemulsion of any one of claims 1-3 or 7, to which a biocide, fungicide, nematicide, herbicide, pesticide, insecticide or any combinations thereof are added.

9. A method of dispersing a compound, comprising:
dispersing the compound and the microemulsion of any one of claims 1-3 or 7, in an aqueous solution.

10. The method of claim 9, wherein the compound is dispersed in an aqueous solution at a concentration of between 0.1 percent to 20 percent by weight.

11. Use of the microemulsion of any one of claims 1-3 or 7, in a composition for bioremediation.

12. Use of the microemulsion of any one of claims 1-3 or 7, as an agent for application of fertilizers.

13. Use of the microemulsion of any one of claims 1-3 or 7, for dispersing a biocide, a fungicide, a nematacide, an herbicide, a pesticide, an insecticide or combinations of any thereof in an aqueous solution.

## Patentansprüche

1. Mikroemulsion, umfassend:
ein Säuerungsmittel, das aus der Gruppe ausgewählt ist, die aus Propionsäure, Essigsäure, Milchsäure, Fumarsäure, Zitronensäure, Phosphorsäure und Kombinationen davon besteht;
einen Emulgator, der aus der Gruppe ausgewählt ist, die aus verflüssigten Lecithinen, entölten Lecithinen, rohen Lecithinen und Kombinationen davon besteht;
ein Cotensid, das aus der Gruppe ausgewählt ist, die aus Sorbitanmonostearat, Polyoxyethylenester von Kolophonium, Polyoxyethylendodecylmonoether, Polyoxyethylen-Polyoxypropylen-Blockcopolymer, Polyoxyethylenmonolaurat, Polyoxyethylenmonohexadecylether, Polyoxyethylenmonooleat, Polyoxyethylenmono(cis-9-octadecenyl)ether, Polyoxyethylenmonostearat, Polyoxyethylenmonooctadecylether, Polyoxyethylendioleat, Polyoxyethylendistearat, Polyoxyethylensorbitanmonolaurat, Polyoxyethylensorbitanmonooleat, Polyoxyethylensorbitanmonopalmitat, Polyoxyethylensorbitanmonostearat, Polyoxyethylensorbitantrioleat, Polyoxyethylensorbitantristearat, Polyglycerinester von Ölsäure, Polyoxyethylensorbithexastearat, Polyoxyethylenmonotetradecylether, Polyoxyethylensorbithexaoleat, Tallöl-Hexaester mit Sorbit, ethoxyliertem Ricinusöl, ethoxyliertem Sojaöl, ethoxyliertem Polyoxyethylensorbittetraoleat, gemischten Estern mit Glycerin und Polyethylenglycol, Alkoholen und Kombinationen davon besteht; und
Wasser;
weiterhin umfassend eine Verbindung, die aus der Gruppe ausgewählt ist, die aus pflanzlichen Fettsäuren, Sojafettsäuren und Kombinationen davon besteht;
wobei die Mikroemulsion eine klare, isotrope, thermodynamische stabile Flüssigkeit ist; und
wobei die pflanzlichen Fettsäuren aus der Gruppe ausgewählt sind, die aus Caprylsäure, Caprinsäure, Laurinsäure, Myristinsäure, Palmitinsäure, Stearinsäure, Arachinsäure, Behensäure, Lignocerinsäure, Hexacosansäure, Octacosansäure, Triacontansäure und n-Dotriacontansäure und solchen, die eine ungerade Anzahl von Kohlenstoffatomen aufweisen, wie n-Valeriansäure, Önanthsäure, Pelargonsäure, Hendecansäure, Tridecansäure, Pentadecansäure, Heptadecansäure, Nonadecansäure, Heneicosansäure, Tricosansäure, Pentacosansäure, Heptacosansäure, Isobuttersäure, Isocapronsäure, Isocaprylsäure, Isocaprinsäure, Isolaurinsäure, 11-Methyldodecansäure, Isomyristinsäure, 13-Methyltetradecansäure, Isopalmitinsäure, 15-Methylhexadecansäure, Isostearinsäure, 17-Methyloctadecansäure, Isoarachinsäure, 19-Methyleicosansäure, a-Ethylhexansäure, a-Hexyldecansäure, a-Heptylundecansäure, 2-Decyltetradecansäure, 2 Undecyltetradecansäure, 2-Decylpentadecansäure, 2-Undecylpentadecansäure, 6-Methyloctansäure, 8-Methyldecansäure, 10-Methyldodecansäure, 12-Methyltetradecansäure, 14-Methylhexadecansäure, 16-Methyloctadecansäure, 18-Methyleicosansäure, 20-Methyldocosansäure, 22-Methyltetracosansäure, 24-Methylhexacosansäure, 26-Methyloctacosansäure, einschließlich 4-Decensäure, Caproleinsäure, 4-Dodecensäure, 5-Dodecensäure, Lauroleinsäure, 4-Tetradecensäure, 5-Tetradecensäure, 9-Tetradecensäure, Palmitoleinsäure, 6-Octadecensäure, Ölsäure, 9-Octadecensäure, 11-Octadecensäure, 9-Eicosensäure, cis-11-Eicosensäure, Cetoleinsäure, 13-Docosensäure, 15-Tetracosensäure, 17-Hexacosensäure, 6,9,12,15-Hexadecatetraensäure, Linoleinsäure, Linolensäure (18:3 n3), gamma-Linolensäure (18:3 n6), a-Eleostearinsäure, Gadoleinsäure (20:1), a-Eleostearinsäure, Punicinsäure, 6,9,12,15-Octadecatetraensäure, Parinarsäure, 5,8,11,14-Eicosatetraensäure, Erucasäure, 5,8,11,14,17-Eicosapentaensäure (EPA), 7,10,13,16,19-Docosapentaensäure, 4,7,10,13,16,19-Docosahexaensäure (DHA), a-Hydroxylaurinsäure, a-Hydroxymyristinsäure, a-Hydroxypalmitinsäure, a-Hydroxystearinsäure, omega-Hydroxylaurinsäure, a-Hydroxyarachinsäure, 9-Hydroxy-12-octadecensäure, Ricinoleinsäure, a-Hydroxybehensäure, 9-Hydroxy-trans-10,12-octadecadiensäure, Kamolensäure, Ipurolsäure, 9,10-Dihydroxystearinsäure, 12-Hydroxystearinsäure und Kombinationen davon besteht.

2. Mikroemulsion gemäß Anspruch 1, wobei der Emulgator oder das Cotensid einen HLB-Wert zwischen 10,0 und 18,0 aufweist.

3. Mikroemulsion gemäß einem der Ansprüche 1 oder 2, wobei das Säuerungsmittel Milchsäure ist.

4. Verfahren zur Herstellung einer Mikroemulsion gemäß Anspruch 1, umfassend:
Mischen eines Emulgators, der aus der Gruppe ausgewählt ist, die aus verflüssigten Lecithinen, entölten Lecithinen, rohen Lecithinen und Kombinationen davon besteht, mit einem Cotensid unter Bildung eines Gemischs; und
Mischen eines Säuerungsmittels und von Wasser mit dem Gemisch unter Bildung der Mikroemulsion;
weiterhin umfassend das Mischen einer Verbindung, die aus der Gruppe ausgewählt ist, die aus pflanzlichen Fettsäuren, Sojafettsäuren und Kombinationen davon besteht, mit dem Gemisch.

5. Verfahren gemäß Anspruch 4, wobei die Schritte des Mischens bei einer Temperatur von wenigstens 25 °C während einer Zeit von wenigstens 30 Minuten durchgeführt werden.

6. Verfahren gemäß einem der Ansprüche 4 oder 5, weiterhin umfassend das Dispergieren der Mikroemulsion in Wasser in einer Konzentration von 0,1 Gew.-% bis 20 Gew.-%.

7. Mikroemulsion gemäß Anspruch 1, die Propionsäure als Säuerungsmittel umfasst.

8. Mikroemulsion gemäß einem der Ansprüche 1 bis 3 oder 7, zu der ein Biozid, Fungizid, Nematizid, Herbizid, Pestizid, Insektizid oder Kombinationen davon hinzugefügt werden.

9. Verfahren zum Dispergieren einer Verbindung, umfassend:
Dispergieren der Verbindung und der Mikroemulsion gemäß einem der Ansprüche 1 bis 3 oder 7 in einer wässrigen Lösung.

10. Verfahren gemäß Anspruch 9, wobei die Verbindung in einer Konzentration von 0,1 Gew.-% bis 20 Gew.-% in einer wässrigen Lösung dispergiert wird.

11. Verwendung der Mikroemulsion gemäß einem der Ansprüche 1 bis 3 oder 7 in einer Zusammensetzung zur biologischen Sanierung.

12. Verwendung der Mikroemulsion gemäß einem der Ansprüche 1 bis 3 oder 7 als Mittel zur Anwendung von Düngern.

13. Verwendung der Mikroemulsion gemäß einem der Ansprüche 1 bis 3 oder 7 zum Dispergieren eines Biozids, Fungizids, Nematizids, Herbizids, Pestizids, Insektizids oder Kombinationen davon in einer wässrigen Lösung.

## Revendications

1. Microémulsion comprenant :
un acidifiant choisi dans le groupe constitué par l'acide propionique, l'acide acétique, l'acide lactique, l'acide fumarique, l'acide citrique, l'acide phosphorique et des combinaisons quelconques de ceux-ci ;
un émulsifiant choisi dans le groupe constitué par les lécithines fluidisées, les lécithines déshuilées, les lécithines brutes, et toute combinaison de celles-ci ;
un co-tensioactif choisi dans le groupe constitué par le monostéarate de sorbitane, l'ester de polyoxyéthylène de colophane, le monoéther dodécylique de polyoxyéthylène, le copolymère séquencé de polyoxyéthylène-polyoxypropylène, le monolaurate de polyoxyéthylène, l'éther monohexadécylique de polyoxyéthylène, le monooléate de polyoxyéthylène, l'éther mono(cis-9-octadécénylique) de polyoxyéthylène, le monostéarate de polyoxyéthylène, l'éther monooctadécylique de polyoxyéthylène, le dioléate de polyoxyéthylène, le distéarate de polyoxyéthylène, le monolaurate de polyoxyéthylène sorbitane, le monooléate de polyoxyéthylène sorbitane, le monopalmitate de polyoxyéthylène sorbitane, le monostéarate de polyoxyéthylène sorbitane, le trioléate de polyoxyéthylène sorbitane, le tristéarate de polyoxyéthylène sorbitane, l'ester de polyglycérol d'acide oléique, l'hexastéarate de polyoxyéthylène sorbitol, l'éther monotétradécylique de polyoxyéthylène, l'hexaoléate de polyoxyéthylène sorbitol, le tallol, un hexaester avec le sorbitol, l'huile de ricin éthoxylée, l'huile de soja éthoxylée, le tétraoléate de polyoxyéthylène sorbitol éthoxylé, les esters mixtes avec le glycérol et le polyéthylèneglycol, les alcools, et des combinaisons quelconques de ceux-ci ; et
de l'eau,
comprenant en outre un composé choisi dans le groupe constitué par les acides gras végétaux, les acides gras de soja, et des combinaisons quelconques de ceux-ci,
où la microémulsion est un liquide clair, isotrope, thermodynamiquement stable, et
où les acides gras végétaux sont choisis dans le groupe constitué par l'acide caprylique, l'acide caprique, l'acide laurique, l'acide myristique, l'acide palmitique, l'acide stéarique, l'acide arachique, l'acide béhénique, l'acide lignocérique, l'acide hexacosanoïque, l'acide octacosanoïque, l'acide triacontanoïque et l'acide n-dotriacontanoïque, et ceux ayant un nombre impair d'atomes de carbone, tels que l'acide n-valérique, l'acide énanthique, l'acide pélargonique, l'acide hendécanoïque, l'acide tridécanoïque, l'acide pentadécanoïque, l'acide heptadécanoïque, l'acide nonadécanoïque, l'acide henéicosanoïque, l'acide tricosanoïque, l'acide pentacosanoïque, l'acide heptacosanoïque, l'acide isobutyrique, l'acide isocaproïque, l'acide isocaprylique, l'acide isocaprique, l'acide isolaurique, l'acide 11-méthyldodécanoïque, l'acide isomyristique, l'acide 13-méthyltétradécanoïque, l'acide isopalmitique, l'acide 15-méthyl-hexadécanoïque, l'acide isostéarique, l'acide 17-méthyloctadécanoïque, l'acide isoarachique, l'acide 19-méthyl-éicosanoïque, l'acide a-éthylhexanoïque, l'acide a-hexyldécanoïque, l'acide a-heptylundécanoïque, l'acide 2-décyltétradécanoïque, l'acide 2-undécyltétradécanoïque, l'acide 2-décylpentadécanoïque, l'acide 2-undécylpentadécanoïque, l'acide 6-méthyloctanoïque, l'acide 8-méthyldécanoïque, l'acide 10-méthyldodécanoïque, l'acide 12-méthyltétradécanoïque, l'acide 14-méthylhexadécanoïque, l'acide 16-méthyloctadécanoïque, l'acide 18-méthyl-éicosanoïque, l'acide 20-méthyldocosanoïque, l'acide 22-méthyltétracosanoïque, l'acide 24-méthylhexacosanoïque, l'acide 26-méthyloctacosanoïque, y compris l'acide 4-décénoïque, l'acide caproléique, l'acide 4-dodécénoïque, l'acide 5-dodécénoïque, l'acide lauroléique, l'acide 4-tétradécénoïque, l'acide 5-tétradécénoïque, l'acide 9-tétradécénoïque, l'acide palmitoléique, l'acide 6-octadécénoïque, l'acide oléique, l'acide 9-octadécénoïque, l'acide 11-octadécénoïque, l'acide 9-éicosénoïque, l'acide cis-11-éicosénoïque, l'acide cétoléique, l'acide 13-docosénoïque, l'acide 15-tétracosénoïque, l'acide 17-hexacosénoïque, l'acide 6,9,12,15-hexadécatétraénoïque, l'acide linoléique, l'acide linolénique (18:3 n3), l'acide gamma-linolénique (18:3 n6), l'acide a-éléostéarique, l'acide gadoléique (20:1), l'acide a-éléostéarique, l'acide punicique, l'acide 6,9,12,15-octadécatétraénoïque, l'acide parinarique, l'acide 5,8,11,14-éicosatétraénoïque, l'acide érucique, l'acide 5,8,11,14,17-éicosapentaénoïque (EPA), l'acide 7,10,13,16,19-docosapentaénoïque, l'acide 4,7,10,13,16,19-docosahexaénoïque (DHA), l'acide a-hydroxylaurique, l'acide a-hydroxymyristique, l'acide a-hydroxypalmitique, l'acide a-hydroxystéarique, l'acide oméga-hydroxylaurique, l'acide a-hydroxyarachique, l'acide 9-hydroxy-12-octadécénoïque, l'acide ricinoléique, l'acide a-hydroxybéhénique, l'acide 9-hydroxy-trans-10,12-octadécadiénique, l'acide kamolénique, l'acide ipurolique, l'acide 9,10-dihydroxystéarique, l'acide 12-hydroxystéarique, et des combinaisons quelconques de ceux-ci.

2. Microémulsion selon la revendication 1, dans laquelle l'émulsifiant ou le co-tensioactif a un équilibre hydrophile-lipophile compris entre 10,0 et 18,0.

3. Microémulsion selon l'une quelconque des revendications 1 et 2, dans laquelle l'acidifiant est l'acide lactique.

4. Procédé de production d'une microémulsion selon la revendication 1, comprenant :
le mélange d'un émulsifiant choisi dans le groupe constitué par les lécithines fluidisées, les lécithines déshuilées, les lécithines brutes, et toute combinaison de celles-ci, avec un co-tensioactif, formant ainsi un mélange ; et
le mélange d'un acidifiant et de l'eau avec le mélange ci-dessus, formant ainsi la microémulsion,
comprenant en outre le mélange d'un composé choisi dans le groupe constitué par les acides gras végétaux, les acides gras de soja, et des combinaisons quelconques de ceux-ci, avec le mélange ci-dessus.

5. Procédé selon la revendication 4, dans lequel les étapes de mélange sont réalisées à une température d'au moins 25°C pendant une période de temps d'au moins 30 minutes.

6. Procédé selon l'une quelconque des revendications 4 et 5, comprenant en outre la dispersion de la microémulsion dans l'eau à une concentration comprise entre 0,1 pour cent et 20 pour cent en poids.

7. Microémulsion selon la revendication 1, comprenant :
l'acide propionique comme acidifiant.

8. Microémulsion selon l'une quelconque des revendications 1-3 ou 7, à laquelle on ajoute un biocide, un fongicide, un nématicide, un herbicide, un pesticide, un insecticide ou toute combinaison de ceux-ci.

9. Procédé de dispersion d'un composé, comprenant :
la dispersion du composé et de la microémulsion de l'une quelconque des revendications 1-3 ou 7, dans une solution aqueuse.

10. Procédé selon la revendication 9, dans lequel le composé est dispersé dans une solution aqueuse à une concentration comprise entre 0,1 pour cent et 20 pour cent en poids.

11. Utilisation de la microémulsion de l'une quelconque des revendications 1-3 ou 7, dans une composition destinée à la bioremédiation.

12. Utilisation de la microémulsion de l'une quelconque des revendications 1-3 ou 7, comme agent servant à appliquer les fertilisants.

13. Utilisation de la microémulsion de l'une quelconque des revendications 1-3 ou 7, pour disperser un biocide, un fongicide, un nématicide, un herbicide, un pesticide, un insecticide ou des combinaisons quelconques de ceux-ci, dans une solution aqueuse.
